# EUROPEAN PATENT SPECIFICATION

(11) **EP 1 603 028 B1**
(45) Date of publication and mention of the grant of the patent: **11.04.2012**
(21) Application number: 05253344.5
(22) Date of filing: 31.05.2005
(51) Int. Cl.: G06F 3/16, G06F 17/30, G10L 11/02, G10L 15/26

(54) **Information processing apparatus and information processing method**
Dispositif de traitement d'information et procédé de traitement d'information
Informationsverarbeitungsgerät und Informationsverarbeitungsverfahren

(30) Priority: 01.06.2004 JP 2004163362
(43) Date of publication of application: 07.12.2005
(73) Proprietor: CANON KABUSHIKI KAISHA, Tokyo (JP)
(72) Inventor: Yamada, Kohei, Canon Kabushiki Kaisha, Tokyo (JP); Yamamoto, Hiroki, Canon Kabushiki Kaisha, Tokyo (JP)
(74) Representative: Hitching, Peter Matthew

(56) References cited:
- US-B1- 6 434 520
- ZHANG T ET AL: "Audio content analysis for online audiovisual data segmentation and classification" IEEE TRANSACTIONS ON SPEECH AND AUDIO PROCESSING, IEEE SERVICE CENTER, NEW YORK, NY, US, vol. 9, no. 4, 1 May 2001 (2001-05-01), pages 441-457, XP001164214 ISSN: 1063-6676

## Description

### BACKGROUND OF THE INVENTION

### Field of the Invention

The present invention relates to an information processing apparatus which can process data by using sound information correlated (associated) with the data.

### Description of the Related Art

Currently, many digital cameras have a function allowing inputting speech information with the picked-up image. There are various proposals for offering an effective organization function of an image and a search function for searching a desired image by using the speech information attached to the image. For example, a method for searching and organizing images on a digital camera by using the speech information added to the images picked-up with the digital camera is disclosed in Japanese Patent Laid-Open No. 9-135417. In an editing device, a method for searching, organizing and processing images by recognizing and utilizing the speech information added to the images is disclosed in Japanese Patent Laid-Open No. 2003-111009.

Although the speech recognition is performed for all the sound information added to the picked-up image while searching, organizing and processing the images in the above-mentioned conventional technology, the sound information is not restricted to only speech, but to other sounds which do not require speech recognition, such as sound effects for the picked-up image and environmental sounds (for example, sound of water, sound of a wind, etc.) etc. Recognition of sound other than speech is very difficult and can lead to increased erroneous sound recognition. In cases where speech recognition processing is performed on sound other than the speech, it is difficult to use the speech recognition result for searching and organizing the images.

That is, in cases where data is processed by using the sound information, since various sound types are contained in the sound information, it is difficult to appropriately perform the data processing.

US 6,434,520 discloses a system for indexing segments of audio/multimedia files according to audio information such as speaker identity, the background environment, channel, and/or the transcription of speech. A user can then retrieve desired segments of the audio file by generating a query based on the indexed information.

### SUMMARY OF THE INVENTION

The present invention is directed to an information processing apparatus which can perform highspeed and exact data processing (for example, data search, speech recognition, sound classification, etc.) by using sound information associated with data.

According to a first aspect of the present invention there is provided a system comprising a digital camera and an information processing apparatus according to claim 1.

According to a second aspect of the present invention there is provided an information processing method according to claim 2.

According to a third aspect of the present invention there is provided a computer program according to claim 3.

According to a fourth aspect of the present invention there is provided a computer readable storage medium according to claim 4.

Further features and advantages of the present invention will become apparent from the following description of exemplary embodiments (with reference to the attached drawings).

### BRIEF DESCRIPTION OF THE DRAWINGS

Fig. 1 is a block diagram of the image search apparatus in accordance with one embodiment of the present invention.

Fig. 2 is a block diagram showing modules of a control program which realizes image search processing of this embodiment.

Fig. 3 is a flowchart showing the image search process of this embodiment.

Figs. 4A and 4B are perspective views of the digital camera incorporating the present invention.

Fig. 5 is a block diagram showing modules of the control program of image-search processing having a function for storing the sound correlated with an image as an object of speech recognition, and a function for storing an attribute of sound other than the object of the speech recognition on a storage medium in correlation with the image.

Fig. 6 is a flowchart showing the image-search processing including storing the sound correlated with an image as an object of speech recognition, and storing an attribute of sound other than the object of the speech recognition on a storage medium in correlation with the image.

Fig. 7 is a block diagram of modules of a control program which realizes image-search processing having a function to automatically discriminate whether the sound correlated with the image is speech.

Fig. 8 is a flowchart showing the procedure of the image search including the processing which discriminates automatically whether the sound correlated with the image is speech.

Fig. 9 is a block diagram of modules of a control program which realizes image-search processing having a function which discriminates automatically whether the sound correlated with the image is speech, and a function for storing an attribute of sound other than the object of the speech recognition on a storage medium in correlation with the image.

Fig. 10 is a flowchart showing the procedure of image-search processing including discriminating automatically whether the sound correlated with the image is speech, and storing an attribute of sound other than the object of the speech recognition on a storage medium in correlation with the image.

Fig. 11 is a flowchart showing the processing which realizes the sound classification using environmental sound recognition.

### DESCRIPTION OF THE EMBODIMENTS

In the following, the embodiments of this invention are explained using the drawings. The information processing apparatus of this invention will be described below as an image-search apparatus which searches image data by using sound information correlated (i.e. associated) with the image data.

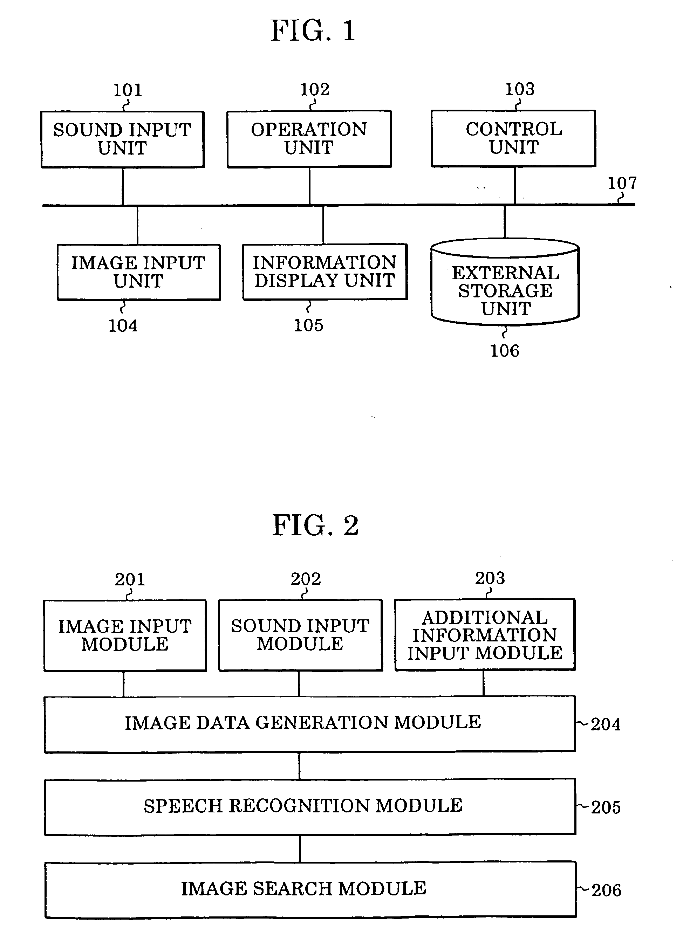

Fig. 1 is a block diagram of the image search apparatus according to one embodiment of the present invention.

A sound input unit 101 allows inputting sound with a microphone, etc. An operation unit 102 allows inputting information with a button, a keyboard, etc. A control unit 103 controls various units of the apparatus with a CPU and a memory (RAM, ROM), etc.

An image input unit 104 allows inputting an image with an optical apparatus or a scanner containing a lens, a CMOS sensor, etc. An information display unit 105 displays information using a liquid crystal display etc. An external storage unit 106 stores information using a CF card, an SD memory or a hard disk, etc. A bus 107 connects the aforementioned units together.

### <First embodiment>

Fig. 2 is a block diagram showing modules of a control program which realizes image search processing of a first embodiment of the present invention.

An image input module 201 performs input process of an image via the image input unit 104, transforms the inputted image into data and outputs the data to the control unit 103. Similarly, a sound input module 202 performs input process of sound via the sound input unit 101, transforms the inputted sound into data, and outputs the data to the control unit 103. The control unit 103 receives the sound information. An additional information input module 203 transforms additional information into data, and outputs the data to the control unit 103. The additional information includes setting information inputted by a user via the operation unit 102 and information relevant to the image outputted by the image input device 104. Also, in an image data generation module 204, the data outputted by each module is associated mutually, and is stored in the external storage unit 106 by a framework called image data.

The control unit 103 controls a speech recognition module 205. The speech recognition module 205 reads the image data generated by the image data generation module 204. Also, the speech recognition module 205 obtains setup information which shows whether the sound correlated with the image is an object of (i.e. to be subjected to) speech recognition from the additional information. Additionally, the speech recognition module performs the speech recognition for the sound which is the object of the speech recognition. The recognition result is stored in the external storage unit 106 and correlated with the image.
An image search module 206 performs matching the speech recognition result with a keyword which the user inputs by the operation unit 102, and displays search results on the information display unit 105 in order to inform the user.

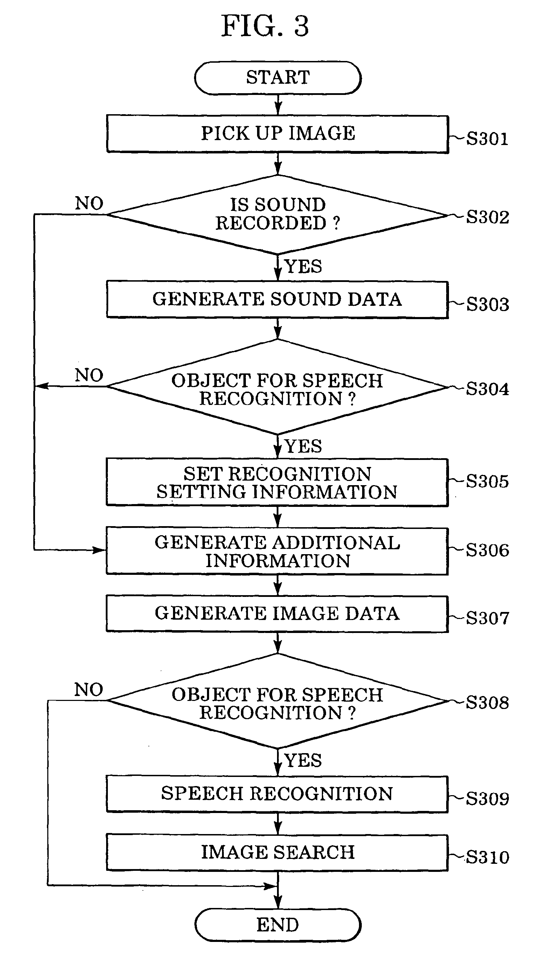

Fig. 3 is a flowchart showing processing of the image search of this embodiment.

First, in step S301, the image is inputted by executing the image input module 201, and the image data is obtained.

Next in step S302, it is determined whether the sound is recorded. In cases in which the sound is recorded for the obtained image, the recording of the sound is started by executing the sound input module 202. In cases where the sound is not recorded, the flow progresses to step S306. A setup of whether to record the sound may be performed before acquisition of the image in step S301.

Then, in step S303, the recorded sound is transformed into data. In step S304, it is determined whether the recorded sound is the object of speech recognition. In cases where it sets the recorded sound as the object of speech recognition, the flow progresses to step S305. On the other hand, in cases where it does not set the recorded sound as the object of speech recognition, it progresses to step S306. In step S305, the setting information which shows whether the sound is enabled as the object of speech recognition is generated as the additional information. The setting information is inputted by the user using the operation unit 102.

In step S306, the additional information input module 203 is executed. The additional information set by the user and the additional information for the image generated in the apparatus is obtained.

In step S307, the image data generation module 204 is executed. The inputted image, sound, and additional information are associated mutually. The associated data is outputted as image data. Additionally, the image data is stored in the external storage unit 106. Although the image, sound, and additional information were continuously recorded as a group in the above-mentioned embodiment, it may be made to record each in a separate area on a storage medium. In this case, link data is given to each data.

In the step S308, the image data obtained in the step S307 is read, and it is determined whether the sound correlated with the image is an object of speech recognition. In cases where the sound correlated with the image is an object of speech recognition, the flow progresses to step S309. In cases where it is not the object of speech recognition, since the image data is not the object of image search, the processing is ended.

In step S309, the speech recognition is performed for the sound correlated with the image by executing the speech recognition module 205. Also, the recognition result is stored in the external storage unit 106 in correlation with the image data.

Finally, in step S310, by executing image search module 206, the image search is performed by using the speech recognition result obtained in the step S309, and the search result is displayed by using the information display unit 105. The processing is then completed.

As the method of the image search, the speech recognition result which is in close agreement with a search information inputted by voice input or the keyboard of the operation unit 102 is extracted, and the image correlated with the extracted speech recognition result is read from the external storage unit 106.

The image input apparatus provided with the digital camera or the scanner function etc. can perform the steps of the processing, and another information processing apparatus, such as a personal computer, can perform the step S308 or below.

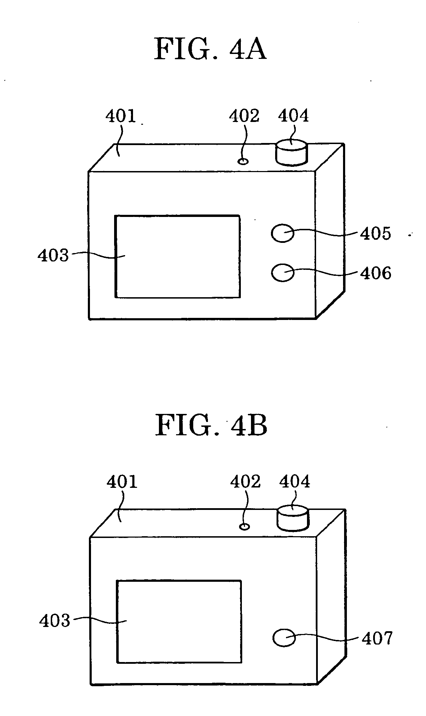

Figs. 4A and 4B show rear views of a case 401 of a digital camera. Reference numeral 402 denotes a microphone; reference numeral 403 denotes a liquid crystal display; and reference numeral 404 denotes a shutter button. Reference numerals 405 and 406 denote buttons. In this embodiment, the button 405 is assigned as a "voice note button," and the button 406 is assigned as a "recording button." By depressing the button 405, the sound for speech recognition can be recorded, and by depressing the button 406, the sound which does not perform the speech recognition can be recorded.

As another example, by assigning a single button 407 as shown in Fig. 4B, as a "speech recognition button," by depressing the button 407, an image can be enabled as the object of speech recognition. Half-pressing the single button 407 can be assigned to the function in which the sound which is not an object of speech recognition can be recorded. If a button has a range of depression, the half-pressing the button involves depressing the button to a state less than the full depression range, and maintaining the depression of the button at that state.

Thus, according to this embodiment, when a sound is correlated with an image, a user can determined whether the sound is used as the object of speech recognition. That is, in the system shown in Fig. 3, it can decide arbitrarily whether the sound recorded by the user is used as the search object by the speech recognition. As such, in the image search apparatus which uses the speech recognition, the sound not requiring the speech recognition is excluded beforehand, therefore improving the speed of image search.

### <Modification>

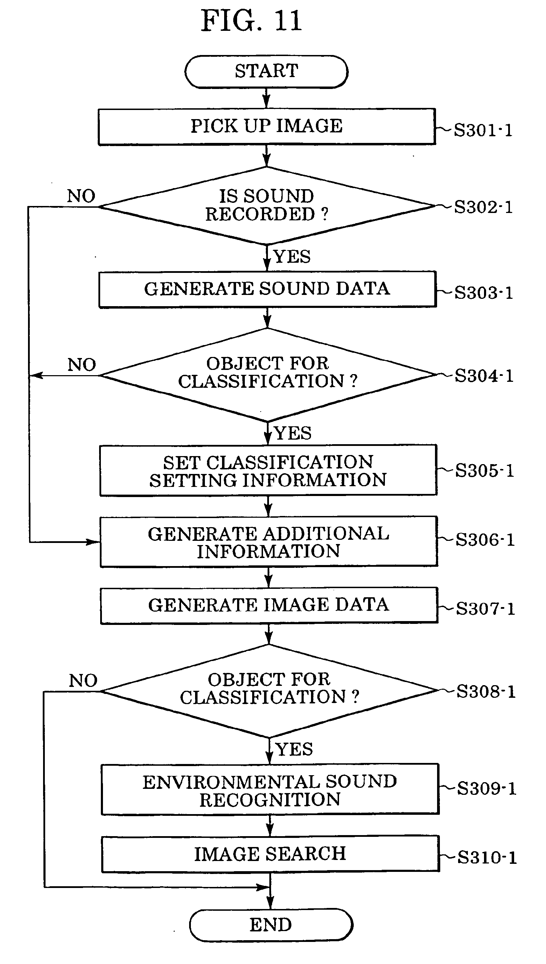

Fig. 11 is a flowchart showing the processing for sound classification using environmental sound recognition. The configuration of module of this modification transposes the speech recognition module 205 of Fig. 2 to an environmental sound recognition module.

First, in step S301-1, the image is inputted by executing the image input module 201, and the image data is obtained.

Next, in step S302-1, it is determined whether the sound is recorded for the obtained image. In cases where the sound is recorded for the obtained image, the recording of the sound is started by executing the sound input module 202. In cases where the sound is not recorded, the processing progresses to step S306-1. A setup of whether to record the sound may be performed before acquisition of the image.

Then, in step S303-1, sound data is generated from the recorded sound. In step S304-1, it is determined whether the recorded sound is the object of classification. In cases in which the recorded sound is the object of classification, the processing progresses to step S305-1. On the other hand, in cases in which the recorded sound is not the object of classification, the processing progresses to step S306-1. In step S305-1, the setting information which indicates whether the sound is enabled as the object of classification is generated as the additional information. The setting information is inputted by the user using the operation unit 102.

In step S306-1, the additional information input module 203 is executed. The additional information set by the user and the additional information for the image generated in the apparatus is obtained.

In step S307-1, the image data generation module 204 is executed. The inputted image, sound, and additional information are associated mutually. The associated data is outputted as image data, which is stored in the external storage unit 106. Although the image, sound, and additional information were continuously recorded as a group, each may be recorded in a separate area on a storage medium. In the above-mentioned case, link data is given to each data.

In the step S308-1, the image data obtained in the step S307-1 is read, and then it is determined whether the sound correlated with the image is the object of classification. In cases in which the sound correlated with the image is the object of classification, the processing progresses to step S309-1. In cases where it is not the object of classification, since the image data is not the object of image search, the processing ends.

In step S309-1, the sound, which is the object of classification, correlated with the image is analyzed and classified by executing the environmental sound recognition module. The classification result is stored in the external storage unit 106 in correlation with the image data as a sound attribute.

The method of acquiring the sound attribute provides an acoustic model for every environmental sound, such as sounds of water and sounds of wind. A matching process between the characteristic quantity of sound and the acoustic model is performed like the speech recognition, and a classification name of the environmental sound of the acoustic model which had the best match is expressed as the sound attribute of the sound.

Finally, in step S310-1, by executing the image search module 206, the image search is performed by using the environmental sound recognition result obtained in step S309-1, and the search result is displayed by using the information display unit 105. The process is completed.

As the method of the image search, the sound attribute which is in close agreement with a search information inputted by voice input or the keyboard of the operation unit 102 is extracted, and the image correlated with the extracted sound attribute is read from the external storage unit 106.

Thus, according to this illustrative example, when the sound is correlated with an image, a user can determine whether the sound is used as the object of environmental sound recognition. That is, in the process shown in Fig. 11, it can decided arbitrarily whether the sound recoded by the user is used as the search object by environmental sound recognition. By carrying out like this, in the image search apparatus which uses environmental sound recognition, the image associated with the sound in which environmental sound recognition is not necessary can be excluded beforehand, and improvement in the speed of image search can be attained.

### <The second embodiment>

In the first embodiment, the sound that is not an object of speech recognition in the sound correlated with the image was not processed. In the second embodiment, the sound which is not an object of speech recognition is analyzed, by classifying the sound correlated with the image, a sound attribute is generated and the method for performing the image search by using the sound attribute is described.

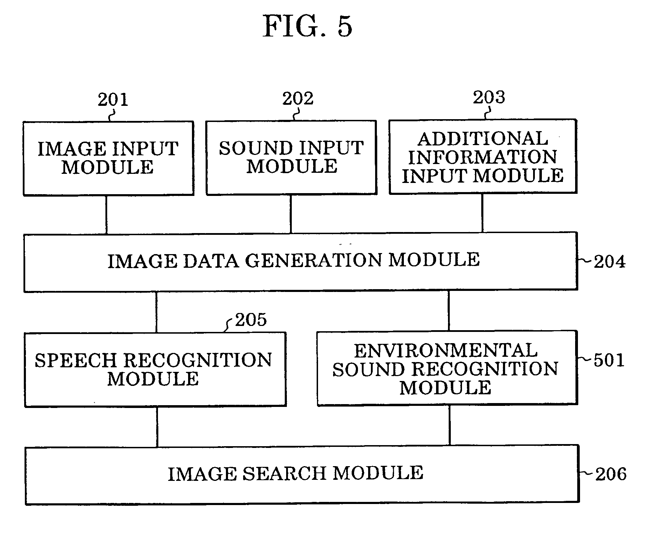

Fig. 5 is a block diagram showing the modules of a control program for image-search processing having a function for storing the sound correlated with an image as an object of speech recognition, and a function for storing an attribute of sound other than the object of the speech recognition on a storing medium in correlation with the image. The configuration of module of the second embodiment is an arrangement of having added an environmental sound recognition module 501 to the configuration of module of Fig. 2. Therefore, the same reference numbers will be used in Fig. 5.

The environmental sound recognition module 501 analyzes the sound which is not an object of speech recognition, and generates a sound attribute, such as sounds of water and sounds of a wind, to the sound. The module 501 is a module which correlates the sound attribute with the image.

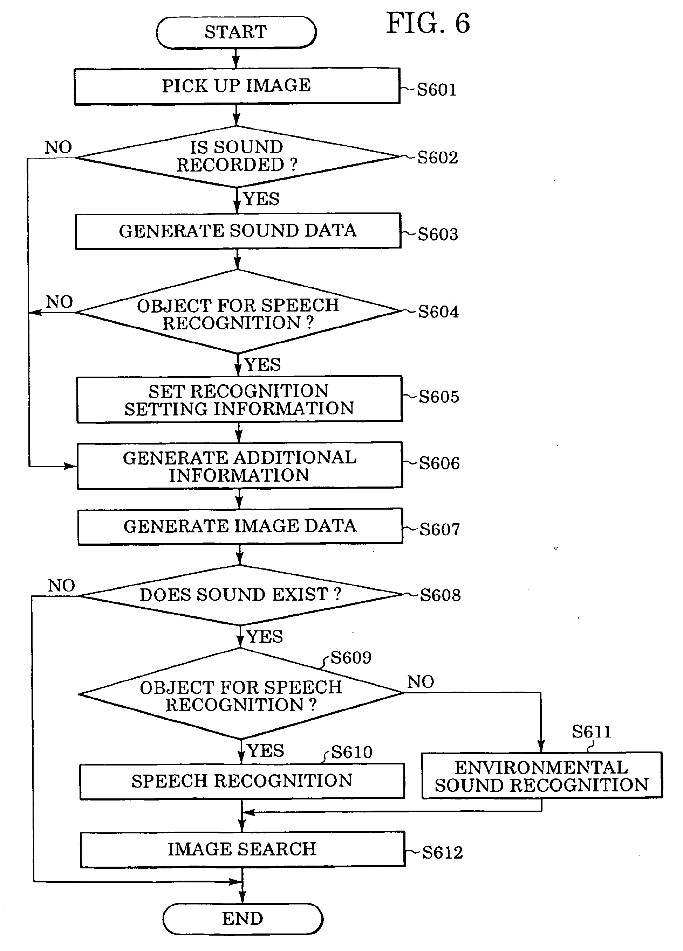

Fig. 6 is a flowchart showing the image-search processing of the control program having the function for storing the sound correlated with an image as an object of speech recognition, and the function for storing an attribute of sound other than the object of the speech recognition on a storing medium in correlation with the image.

First, in step S601, the image is inputted by executing the image input module 201, and the image data is obtained.

Next, in step S602, it is determined whether the sound is recorded for the obtained image. In cases in which the sound is recorded for the obtained image, the recording of the sound is started by executing the sound input module 202. In cases in which the sound is not recorded, the processing progresses to step S606. A setup of whether to record the sound may be performed before acquisition of the image.

Then, in step S603, data is generated from the recorded sound. In step S604, it is determined whether the recorded sound is the object of speech recognition. In cases in which the recorded sound is the object of speech recognition, the processing progresses to step S605. On the other hand, in cases in which the recorded sound is not the object of speech recognition, the processing progresses to step S606. In step S605, the setting information which shows whether the sound is enabled as the object of speech recognition is generated as the additional information.
The setting information is inputted by the user using the operation unit 102.

In step S606, the additional information input module 203 is executed. The additional information set by the user and the additional information for the image generated in the apparatus is obtained.

In step S607, the image data generation module 204 is executed. The inputted image, sound, and additional information are associated mutually. The associated data is outputted as image data, and the image data is stored in the external storage unit 106. Although the image, sound, and additional information are continuously recorded as a group in the above-mentioned embodiment, each may be recorded in a separate area on a storage medium. In the above-mentioned case, link data is given to each data.

In the step S608, the image data obtained in the step S607 is read, and it is determined whether the sound correlated with the image exists. If the sound correlated with the image does not exist, the processing ends. If the sound is correlated with the image, the processing progresses to step S609.

In the step S609, the additional information correlated with the image is read, and it is determined whether the sound correlated with the image is an object of speech recognition. If the sound correlated with the image is an object of speech recognition, the processing progresses to step S610, and if it is not the object of speech recognition, the processing progresses to step S611.

In step S610, the speech recognition is performed for the sound correlated with the image by executing the speech recognition module 205, and the recognition result is stored in the external storage unit 106 in correlation with the image data.

In step S611, the sound, which is not the object of speech recognition and correlated with the image, is analyzed and classified by executing the environmental sound recognition module 501. The classification result is then stored in the external storage unit 106 in correlation with the image data as the sound attribute.

The method of acquiring the sound attribute creates an acoustic model for the every environmental sound, such as sounds of water and sounds of wind. Also, a matching process between the characteristic quantity of sound and the acoustic model is performed like the speech recognition. A classification name of the environmental sound of the acoustic model which showed the best match is expressed as the sound attribute of the sound.

Finally, in step S612, by executing the image search module 206, the image search is performed by using the speech recognition result obtained in step S610 or the environmental sound recognition result obtained in step S611. The search result is displayed by using the information display unit 105. The processing then ends.

As the method of the image search, the speech recognition result or the sound attribute which is in close agreement with a search information inputted by voice input or the keyboard of the operation unit 102 is extracted, and the image correlated with the extracted speech recognition result or sound attribute is read from the external storage unit 106.

The image input apparatus provided with the digital camera, the scanner, etc. can perform all the above-mentioned step, and another information processing apparatus, such as a personal computer, can perform step S608 and thereafter.

Thus, according to this embodiment, when sound is correlated with an image, a user can set whether the sound is used as the object of speech recognition. Also, in this embodiment, the sound can set as a search object by giving the sound an attribute in cases in which the sound is not the object of speech recognition. Thereby, all the images correlated with the sound become a search object. Additionally, since unnecessary speech recognition for search is omissible, the convenience of the image-search apparatus using the speech recognition can be improved, and improvement in the speed of search can be performed.

### <Second illustrative example>

In the first and second embodiments, the sound correlated with the image by operation of a user's button, etc. is arbitrarily enabled as the object of speech recognition. In the second illustrative example, the speech is discriminated from the sound. The sound of the object of the speech recognition is discriminated automatically, and the method for searching an image by using the discriminated result is described.

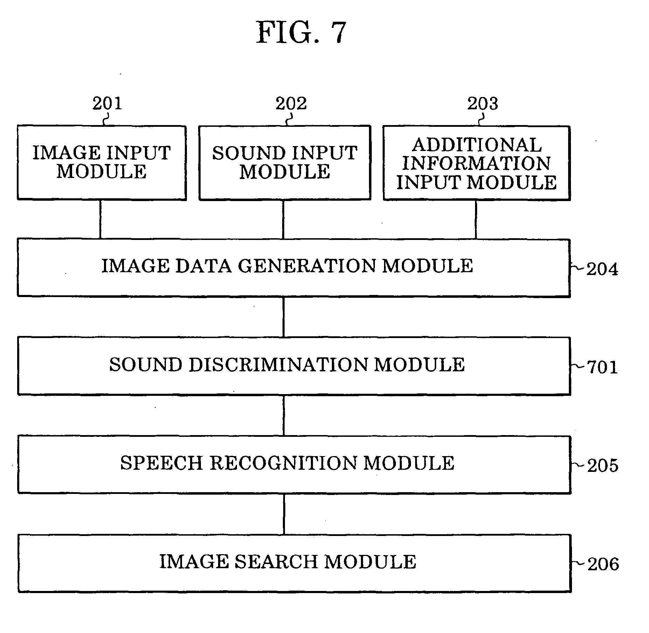

Fig. 7 is a block diagram of the modules of a control program which realizes image-search processing having the function to discriminate automatically whether the sound correlated with the image is speech.

The second illustrative example adds a sound discrimination module 701 to the modules of Fig. 2, and therefore, the same reference numbers of Fig. 2 will be used in Fig. 7.

The sound discrimination module 701 is a module which discriminates automatically whether the sound information correlated with the image is speech, and outputs additional information which shows the discrimination result, correlated with the image.

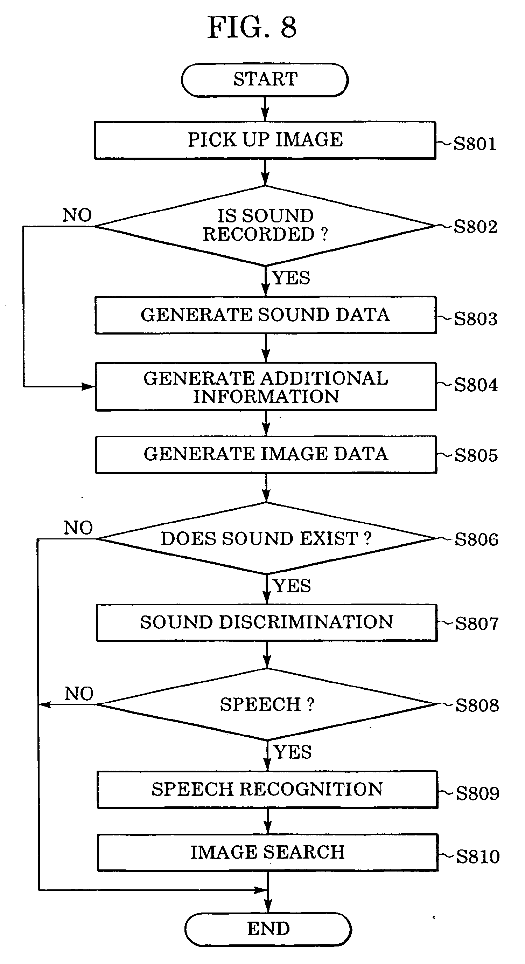

Fig. 8 is a flowchart showing the image search processing of the control program having the function for discriminating automatically whether the sound correlated with the image is speech.

First, in step S801, the image is inputted by executing the image input module 201, and the image data is obtained.

Next, in step S802, it is determined whether the sound is recorded for the obtained image. In cases in which the sound is recorded for the obtained image, the recording of the sound is started by executing the sound input module 202. In cases in which the sound is not recorded, the processing progresses to step S804. A setup of whether to record the sound may be performed before acquisition of the image.

Then, in step S803, data is generated from the recorded sound. In step S804, the additional information input module 203 is executed. The additional information set by the user and the additional information for the image generated in the apparatus is obtained.

In step S805, the image data generation module 204 is executed. The inputted image, sound, and additional information are associated mutually. The associated data is outputted as image data, and the image data is stored in the external storage unit 106. Although the image, sound, and additional information are continuously recorded as a group in the above-mentioned illustrative example, each may be made to recorded each in a separate area on a storage medium. In the above-mentioned case, link data is given to each data.

In the step S806, the image data obtained in the step S805 is read, and it is determined whether the sound correlated with the image exists. If the sound correlated with the image does not exist, the processing ends. If the sound is correlated with the image, the processing progresses to step S807.

In step S807, by executing the sound discrimination module 701, it is discriminated whether the sound correlated with the image is speech.

An example of a method to discriminate the speech automatically is explained hereafter. For example, speech recognition is performed to the sound correlated with the image using the acoustic model of the speech created using the various speeches, and the acoustic model of the environmental sound created using the environmental sound. In cases in which matching of the acoustic model of the speech is higher than the acoustic model of the environmental sound, the sound is determined as the speech.

As another example, the sound correlated with an image containing people can be discriminated. The following are methods to determine whether people are contained in the image.
1) determining whether people are contained in the image based on the photographing mode (for example, red eyes correction mode, person photographing mode);
2) image recognition.

In step S808, it is determined automatically whether the sound is the object of speech recognition from the discrimination result of step S807. The image data with which the sound other than the speech was correlated is excepted from the object of search. In cases in which the speech is correlated with the image data, the processing progresses to step S809.

In step S809, the speech recognition is performed for the sound correlated with the image by executing the speech recognition module 205, and the recognition result is stored in the external storage unit 106 in correlation with the image data.

Finally, in step S810, by executing the image search module 206, the image search is performed by using the speech recognition result obtained in step S809, and the search result is displayed by using the information display unit 105. The processing is then completed.

As the method of the image search, the speech recognition result, which is in close agreement with a search information inputted by voice input or the keyboard of the operation unit 102, is extracted, and the image correlated with the extracted speech recognition result is read from the external storage unit 106.

The image input apparatus provided with the digital camera, the scanner, etc. can perform all the above-mentioned step, and another information processing apparatus, such as a personal computer, can perform the step S806 and thereafter.

Thus, since the image-search apparatus of this illustrative example can determine automatically whether sound correlated with the image is used as the object of speech recognition according to this illustrative example, the image of a search object can be sorted out automatically. Thereby, for example, a user's input process for speech recognition is reduced. Since the image which does not have to carry out the speech recognition is excepted automatically, the convenience of the image-search apparatus using speech recognition can improve sharply.

### <Third illustrative example>

In the second example, the sound of the object of speech recognition is automatically distinguished by discriminating the sound correlated with the image. In the third illustrative example, the sound, which is not an object of speech recognition, is analyzed, by classifying the sound correlated with the image, a sound attribute is generated and the method for performing the image search by using the sound attribute is described.

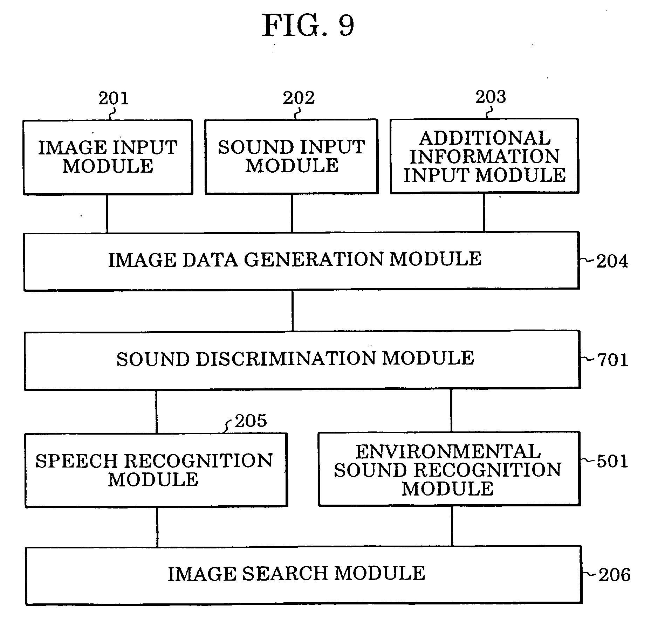

Fig. 9 is a block diagram of the modules of a control program which realizes image-search processing having a function to discriminate automatically whether the sound correlated with the image is speech, and a function for storing an attribute of sound other than the object of the speech recognition on a storage medium in correlation with the image. The modules of the third illustrative example add the environmental sound recognition module 501 of Fig. 5 to the modules of Fig. 7. Therefore, the same reference numbers will be used.

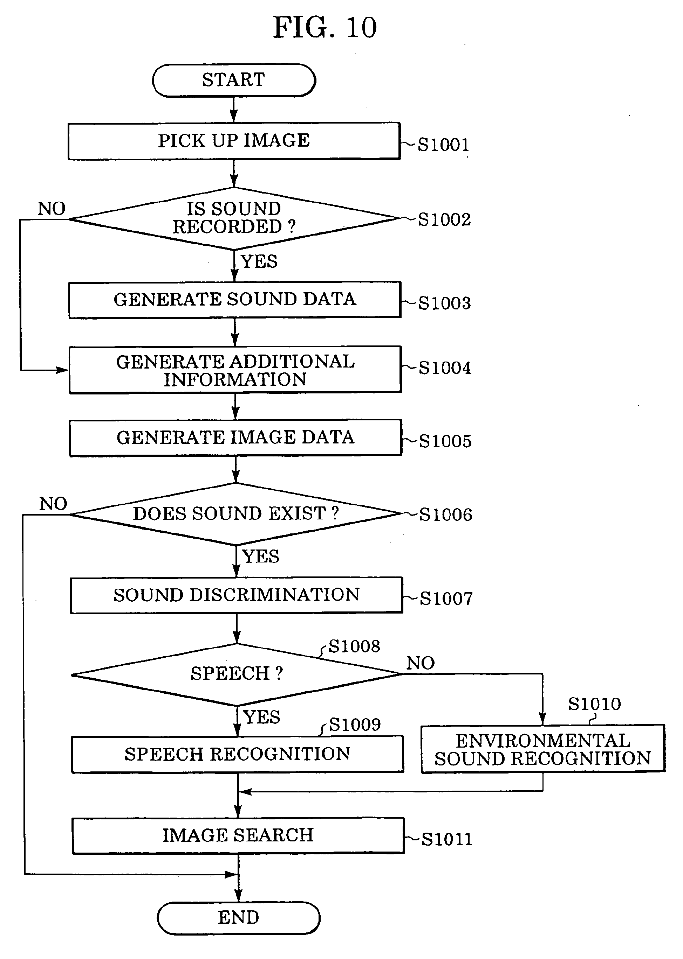

Fig. 10 is a flowchart showing the image-search processing of the control program having the function to discriminate automatically whether the sound correlated with the image is speech, and the function for storing an attribute of sound other than the object of the speech recognition on a storage medium in correlation with the image.

First, in step S1001, the image is inputted by executing the image input module 201, and the image data is obtained.

Next, in step S1002, it is determined whether the sound is recorded for the obtained image. In cases in which the sound is recorded for the obtained image, the recording of the sound is started by executing the sound input module 202. In cases in which the sound is not recorded, the processing progresses to step S1004. A setup of whether to record the sound may be performed before acquisition of the image.

Then, in step S1003, data is generated from the recorded sound. In step S1004, the additional information input module 203 is executed. The additional information set by the user and the additional information for the image generated in the apparatus is obtained.

In step S1005, the image data generation module 204 is executed. The inputted image, sound, and additional information are associated mutually. The associated data is outputted as image data, and the image data is stored in the external storage unit 106. Although the image, sound, and additional information are continuously recorded as a group in the above-mentioned illustrative example, each may be made to recorded each in a separate area on a storage medium. In the above-mentioned case, link data is given to each data.

In the step S1006, the image data obtained in the step S1005 is read, and it is determined whether the sound correlated with the image exists. If the sound correlated with the image does not exist, the processing ends. If the sound is correlated with the image, the processing progresses to step S1007.

In step S1007, by executing the sound discrimination module 701, it is discriminated whether the sound correlated with the image is speech.

An example of a method to discriminate the speech automatically is explained hereafter. For example, speech recognition is performed to the sound correlated with the image using the acoustic model of the speech created using the various speeches, and the acoustic model of the environmental sound created using the environmental sound. In cases where matching of the acoustic model of the speech is higher than the acoustic model of the environmental sound, the sound is determined as the speech.

As another example, the sound correlated with an image containing people can be discriminated. The following are methods to determine whether people are contained in the image.
1) determining whether people are contained in the image based on the photographing mode (for example, red eyes correction mode, person photographing mode);
2) image recognition.

In step S1008, it is determined automatically whether the sound is the object of speech recognition from the discrimination result of step S1007. In cases in which the sound is a sound other than the speech, the processing progresses to step S1010. In cases in which the sound is the speech, the processing progresses to S1009.

In step S1009, the speech recognition is performed for the sound correlated with the image by executing the speech recognition module 205, and the recognition result is stored in the external storage unit 106 in correlation with the image data.

In step S1010, the sound, which is not the object of speech recognition and correlated with the image, is analyzed and classified by executing the environmental sound recognition module 501. The classification result is stored in the external storage unit 106 in correlation with the image data as the sound attribute.

The method of acquiring the sound attribute creates an acoustic model for every environmental sound, such as sounds of water, and sounds of wind. Matching the characteristic quantity of sound and the acoustic model is performed like the speech recognition, and the classification name of the environmental sound of the acoustic model which showed the best match is made into the sound attribute of the sound.

Finally, in step S1011, by executing the image search module 206, the image search is performed by using the speech recognition result obtained in the step S1009 or the environmental sound recognition result obtained in the step S1010, and the search result is displayed by using the information display unit 105. The processing is then completed.

As the method of the image search, the speech recognition result or the sound attribute, which is in close agreement with a search information inputted by voice input or the keyboard of the operation unit 102, is extracted, and the image correlated with the extracted speech recognition result or sound attribute is read from the external storage unit 106.

The image input apparatus provided with the digital camera, the scanner, etc. can perform all the above-mentioned step, and another information processing apparatus, such as a personal computer, can perform the step S1006 and thereafter.

Thus, since the image-search apparatus of this illustrative example can determine automatically whether sound correlated with the image is used as the object of speech recognition according to this illustrative example, the image of a search object can be sorted out automatically. It can be made a search object by adding a sound attribute to sound other than the object of speech recognition. Thereby, a user's input process for the speech recognition is reduced, for example. Since the image which does not have to carry out speech recognition is excepted automatically and all the images correlated with the sound become a search object, the convenience of the image-search apparatus using speech recognition can improve sharply.

### <Fourth illustrative example>

In the third illustrative example, although the sound discrimination module 701 and environmental sound recognition module 501 were shown as separate modules (see Fig.9), it is not necessary to provide these modules separately. A single module which performs environmental sound recognition to the sound correlated with the image and discriminates whether the sound is speech can be alternatively provided. For example, step S1010 of Fig. 10 can be included in step S1007, and the sound discrimination and the environmental sound recognition can be simultaneously performed by performing speech recognition using the acoustic model of the speech and a plurality of environmental sound models.

### <Third embodiment>

Although the first and second embodiments explained the image with the example as data correlated with the sound, the present invention is not restricted only to the image. This invention is applicable to all digital content, such as a document and video.

Note that the present invention can be applied to an apparatus including a single device or to a system constituted by a plurality of devices.

Furthermore, the invention can be implemented by supplying a software program, which implements the functions of the foregoing embodiments, directly or indirectly to a system or apparatus, reading the supplied program code with a computer of the system or apparatus, and then executing the program code. In this case, so long as the system or apparatus has the functions of the program, the mode of implementation need not rely upon a program.

Accordingly, the computer and the program code installed in the computer executing the functions of the present invention also implement the present invention. In other words, the claims of the present invention also cover a computer program for the purpose of implementing the functions of the present invention.

In this case, so long as the system or apparatus has the functions of the program, the program may be executed in any form, such as an object code, a program executed by an interpreter, or scrip data supplied to an operating system.

Examples of storage media that can be used for supplying the program are a floppy disk, a hard disk, an optical disk, a magneto-optical disk, a CD-ROM (compact disk - read-only memory), a CD-R (CD - recordable), a CD-RW (CD - rewritable), a magnetic tape, a non-volatile type memory card, a ROM, and a digital versatile disk (e.g., DVD (DVD-ROM, DVD-R).

As for the method of supplying the program, a client computer can be connected to a website on the Internet using a browser of the client computer, and the computer program of the present invention or an automatically-installable compressed file of the program can be downloaded to a recording medium such as a hard disk. Further, the program of the present invention can be supplied by dividing the program code constituting the program into a plurality of files and downloading the files from different websites. In other words, a WWW (World Wide Web) server that downloads, to multiple users, the program files that implement the functions of the present invention by computer is also covered by the claims of the present invention.

It is also possible to encrypt and store the program of the present invention on a storage medium such as a CD-ROM, distribute the storage medium to users, allow users who meet certain requirements to download decryption key information from a website via the Internet, and allow these users to decrypt the encrypted program by using the key information, whereby the program is installed in the user computer.

Besides the cases where the aforementioned functions according to the embodiments are implemented by executing the read program by computer and an operating system or the like running on the computer may perform all or a part of the actual processing so that the functions of the foregoing embodiments can be implemented by this processing.

Furthermore, after the program read from the storage medium is written to a function expansion board inserted into the computer or to a memory provided in a function expansion unit connected to the computer, a CPU or the like mounted on the function expansion board or function expansion unit performs all or a part of the actual processing so that the functions of the foregoing embodiments can be implemented by this processing.

## Claims

1. A system comprising a digital camera and an information processing apparatus; the digital camera comprising:
an image input unit (104) configured to input an image;
an image input module (201) configured to perform an input process of an image via the image input unit (104);
a sound input unit (101) configured to input sound, in response to a first operation or a second operation by a user;
a sound input module (202) configured to perform an input process of sound via the sound input unit (101);
an operation unit (102) configured to input setting information which shows whether or not sound is enabled as the object of speech recognition, the sound being enabled as an object of speech recognition in response to the first user operation and the sound not being enabled as an object of speech recognition in response to the second user operation;
a setting information input module (203) configured to transform the setting information into data;
an image data generation module (204) for generating image data by mutually associating data output by the image input module (201), the sound input module (202), and the setting information input module (203), and for storing the image data in
a storage unit (106),
wherein the first operation is a user operation of depressing a predetermined button of the digital camera and the second operation is a user operation of half-pressing the predetermined button;
the information processing apparatus comprising:
a speech recognition module (205) for reading the image data stored in the storage unit (106) and for obtaining (S308) setting information which shows whether or not the sound associated with the image is an object of speech recognition; means for performing speech recognition (S309) on the sound associated with the image in a case that the setting information indicates that the sound associated with the image is enabled as an object of speech recognition.

2. An information processing method comprising:
an image input step, performed by an image input module (201), of performing an input process of an image via an image input unit (104);
a sound input step, performed by a sound input module (202), of performing an input process of sound via a sound input unit (101) in response to a first operation or a second operation by a user (S303) on the digital camera;
a setting step of inputting setting information which shows whether or not sound is enabled as the object of speech recognition, the sound being enabled as an object of speech recognition in response to the first user operation and the sound not being enabled as an object of speech recognition in response to the second user operation;
a setting generation step, performed by a setting information input module (203), of transforming the setting information into data;
an image data generating step of generating image data by mutually associating data output by the image input module (201), the sound input module (202), and the setting information input module (203); and
a storage step of storing the image data generated in the image data generating step;
wherein the first operation is a user operation of depressing a predetermined button of the digital camera and the second operation is a user operation of half-pressing the predetermined button;
an information processing apparatus reads the image data stored in the storage step and obtains (S308) setting information which shows whether or not the sound associated with the image is an object of speech recognition; and
the information processing apparatus performs speech recognition on the sound associated with the image in a case that the setting information indicates that the sound associated with the image is enabled as an object of speech recognition.

3. A computer program executable by computer to perform the image processing method according to claim 2.

4. A computer readable storage medium storing the program according to claim 3.

## Patentansprüche

1. System mit einer Digitalkamera und einer Informationsverarbeitungsvorrichtung, wobei die Digitalkamera umfasst:
eine Bildeingabeeinheit (104), konfiguriert zum Eingeben eines Bildes;
ein Bildeingabemodul (201), konfiguriert zum Durchführen eines Bildeingabeprozesses über die Bildeingabeeinheit (104);
eine Toneingabeeinheit (101), konfiguriert zum Eingeben von Ton, ansprechend auf eine erste oder zweite Betätigung durch einen Benutzer;
ein Toneingabemodul (202), konfiguriert zum Durchführen eines Toneingabeprozesses über die Toneingabeeinheit (101);
eine Betätigungseinheit (102), konfiguriert zum Eingeben von Einstellinformation, die angibt, ob Ton als Gegenstand von Spracherkennung freigegeben ist oder nicht, wobei der Ton ansprechend auf die erste Benutzerbetätigung als Gegenstand von Spracherkennung freigegeben wird und ansprechend auf die zweite Benutzerbetätigung als Gegenstand von Spracherkennung nicht freigegeben wird;
ein Einstellinformationseingabemodul (203), konfiguriert zum Umwandeln der Einstellinformation in Daten;
ein Bilddatenerzeugungsmodul (204) zum Erzeugen von Bilddaten durch gegenseitiges Zuordnen von vom Bildeingabemodul (201), vom Toneingabemodul (202) und vom Einstellinformationseingabemodul (203) ausgegebenen Daten, und zum Speichern der Bilddaten in einer Speichereinheit (106),
wobei es sich bei der ersten Betätigung um eine Benutzerbetätigung handelt, bei der ein vorbestimmter Knopf der Digitalkamera gedrückt wird, und es sich bei der zweiten Betätigung um eine Benutzerbetätigung handelt, bei welcher der vorbestimmte Knopf halb gedrückt wird;
wobei die Informationsverarbeitungsvorrichtung umfasst:
ein Spracherkennungsmodul (205) zum Lesen der in der Speichereinheit (106) gespeicherten Bilddaten und zum Erhalten (S308) von Einstellinformation, die angibt, ob der dem Bild zugeordnete Ton Gegenstand von Spracherkennung ist oder nicht; eine Einrichtung zum Durchführen von Spracherkennung (S309) bezüglich des dem Bild zugeordneten Tons, falls die Einstellinformation anzeigt, dass der dem Bild zugeordnete Ton als Gegenstand von Spracherkennung freigegeben ist.

2. Informationsverarbeitungsverfahren, umfassend:
einen von einem Bildeingabemodul (201) durchgeführten Bildeingabeschritt zum Durchführen eines Bildeingabeprozesses über eine Bildeingabeeinheit (104);
einen von einem Toneingabemodul (202) durchgeführten Toneingabeschritt zum Durchführen eines Toneingabeprozesses über eine Toneingabeeinheit (101), ansprechend auf eine erste oder zweite Betätigung durch einen Benutzer (S303) an der Digitalkamera;
einen Einstellschritt zum Eingeben von Einstellinformation, die angibt, ob Ton als Gegenstand von Spracherkennung freigegeben ist oder nicht, wobei der Ton ansprechend auf die erste Benutzerbetätigung als Gegenstand von Spracherkennung freigegeben wird und ansprechend auf die zweite Benutzerbetätigung als Gegenstand von Spracherkennung nicht freigegeben wird;
einen von einem Einstellinformationseingabemodul (203) durchgeführten Einstelldatenerzeugungsschritt zum Umwandeln der Einstellinformation in Daten;
einen Bilddatenerzeugungsschritt zum Erzeugen von Bilddaten durch gegenseitiges Zuordnen von vom Bildeingabemodul (201), vom Toneingabemodul (202) und vom Einstellinformationseingabemodul (203) ausgegebenen Daten, und
einen Speicherschritt zum Speichern der im Bilddatenerzeugungsschritt erzeugten Bilddaten,
wobei es sich bei der ersten Betätigung um eine Benutzerbetätigung handelt, bei der ein vorbestimmter Knopf der Digitalkamera gedrückt wird, und es sich bei der zweiten Betätigung um eine Benutzerbetätigung handelt, bei welcher der vorbestimmte Knopf halb gedrückt wird;
eine Informationsverarbeitungsvorrichtung die im Speicherschritt gespeicherten Bilddaten liest und Einstellinformation erhält (S308), die angibt, ob der dem Bild zugeordnete Ton Gegenstand von Spracherkennung ist oder nicht; und
die Informationsverarbeitungsvorrichtung Spracherkennung bezüglich des dem Bild zugeordneten Tons durchführt, falls die Einstellinformation anzeigt, dass der dem Bild zugeordnete Ton als Gegenstand von Spracherkennung freigegeben ist.

3. Computerprogramm, das von einem Computer ausführbar ist, um das Bildverarbeitungsverfahren nach Anspruch 2 durchzuführen.

4. Computerlesbares Speichermedium, welches das Programm nach Anspruch 3 speichert.

## Revendications

1. Système comprenant un appareil numérique de prise de vues et un appareil de traitement de l'information, l'appareil numérique de prise de vues comprenant :
une unité d'entrée d'image (104), configurée pour l'entrée d'une image ;
un module d'entrée d'image (201), configuré pour effectuer un traitement d'entrée sur une image, via l'unité d'entrée d'image (104) ;
une unité d'entrée de son (101), configurée pour l'entrée de son, en réponse à une première opération ou à une seconde opération par un utilisateur ;
un module d'entrée de son (202), configuré pour effectuer un traitement d'entrée sur le son, via l'unité d'entrée de son (101) ;
une unité d'exploitation (102), configurée pour entrer des informations de paramétrage qui indiquent si le son est ou non validé comme l'objet d'une reconnaissance vocale, le son étant validé comme l'objet de la reconnaissance vocale en réponse à la première opération de l'utilisateur et le son n'étant pas validé comme l'objet de la reconnaissance vocale en réponse à la seconde opération de l'utilisateur ;
un module d'entrée d'informations de paramétrage (203), configuré pour transformer les informations de paramétrage en données ;
un module de production de données d'image (204), destiné à produire des données d'image en associant mutuellement des données produites par le module d'entrée d'image (201), le module d'entrée de son (202) et le module d'entrée d'informations de paramétrage (203) et à stocker les données d'image dans une unité de stockage (106) ;
dans lequel la première opération est une opération de l'utilisateur consistant à enfoncer un bouton prédéterminé de l'appareil numérique de prise de vues et la seconde opération est une opération de l'utilisateur consistant à enfoncer à moitié le bouton prédéterminé ;
l'appareil de traitement de l'information comprenant :
un module de reconnaissance vocale (205), destiné à lire les données d'image stockées dans l'unité de stockage (106) et à obtenir (S308) des informations de paramétrage qui indiquent si le son associé à l'image doit ou non faire l'objet d'une reconnaissance vocale ; un moyen destiné à effectuer une reconnaissance vocale (S309) sur le son associé à l'image si ces informations de paramétrage indiquent que le son associé à l'image est validé comme un objet de la reconnaissance vocale.

2. Procédé de traitement de l'information, comprenant :
une étape d'entrée d'image, exécutée par un module d'entrée d'image (201), consistant à effectuer un traitement d'entrée sur une image, via une unité d'entrée d'image (104) ;
une étape d'entrée de son, exécutée par un module d'entrée de son (202), consistant à effectuer un traitement d'entrée sur le son, via une unité d'entrée de son (101), en réponse à une première opération ou à une seconde opération de l'utilisateur (S303) sur l'appareil numérique de prise de vues ;
une étape de paramétrage, consistant à entrer des informations de paramétrage qui indiquent si le son est ou non validé comme l'objet d'une reconnaissance vocale, le son étant validé comme l'objet de la reconnaissance vocale en réponse à la première opération de l'utilisateur et le son n'étant pas validé comme l'objet de la reconnaissance vocale en réponse à la seconde opération de l'utilisateur ;
une étape de production de paramétrage, exécutée par un module d'entrée d'informations de paramétrage (203), consistant à transformer les informations de paramétrage en données ;
une étape de production de données d'image, consistant à produire des données d'image en associant mutuellement des données produites par le module d'entrée d'image (201), le module d'entrée de son (202) et le module d'entrée d'informations de paramétrage (203) ; et
une étape de stockage consistant à stocker les données d'image produites dans l'étape de production de données d'image ;
dans lequel la première opération est une opération de l'utilisateur consistant à enfoncer un bouton prédéterminé de l'appareil numérique de prise de vues et la seconde opération est une opération de l'utilisateur consistant à enfoncer à moitié le bouton prédéterminé ;
un appareil de traitement de l'information lit les données d'image stockées dans l'étape de stockage et obtient (S308) des informations de paramétrage qui indiquent si le son associé à l'image doit ou non faire l'objet d'une reconnaissance vocale ; et
l'appareil de traitement de l'information effectue une reconnaissance vocale sur le son associé à l'image si ces informations de paramétrage indiquent que le son associé à l'image est validé comme un objet de la reconnaissance vocale.

3. Programme d'ordinateur pouvant être exécuté par un ordinateur pour mettre en oeuvre le procédé de traitement d'images selon la revendication 2.

4. Support de stockage lisible par ordinateur, stockant le programme selon la revendication 3.
